# EUROPEAN PATENT SPECIFICATION

(11) **EP 1 403 976 B1**
(45) Date of publication and mention of the grant of the patent: **23.11.2005**
(21) Application number: 02021679.2
(22) Date of filing: 27.09.2002
(51) Int. Cl.: H01R 13/52, H02K 5/10

(54) **Connection assembly for the electrical connection of an electric motor**
Elektrische Verbindungsanordnung für den elektrischen Anschluss eines Elektromotors
Connecteur de raccordement électrique pour le raccordement d'un moteur électrique

(43) Date of publication of application: 31.03.2004
(73) Proprietor: MINEBEA Co., Ltd., Kitasaku-gun, Nagano-ken (JP)
(72) Inventor: Oelsch, Jürgen, 97618 Hohenroth (DE); Eppler, Willi, 72365 Ratshausen (DE)
(74) Representative: Liesegang, Eva

(56) References cited:
- EP-A- 0 849 866
- US-A- 5 444 315
- US-A- 6 099 325

## Description

The invention relates to a connection assembly for the electrical connection of an electric motor, which has a plastic mounting plate with integrated connection elements, a printed circuit board with sensor and/or control components for the electric motor and a seal.

Such a connection assembly has been proposed, in which said seal has two individual flat seals, which are loosely inserted between the corresponding front faces of the mounting plate and the motor casing part and which are then locked by clamping the two casing parts together using screws or the like, so that the connection assembly and electric motor are sealed against external influence in such a way that e.g. no spray water can enter the motor casing.

EP 0 849 866 A1 discloses an electric motor having a connection assembly in which there is only one single component seal between two motor casing parts, i.e. a motor casing and a bearing shield. The motor provides a housing which is sealed against the intrusion of humidity.

US 5,444 315 discloses a bushing isolator for lead-through of electrical lines providing a seal between two housing wherein electrical lines are molded into an inelastic carrier and covered at both faces of the carrier. A seal is molded onto the carrier and, in one embodiment, the carrier is disposed between a commutator housing and a gear housing. The design enables the electrical lines to pass into the interior of coaxially located housings in a simple manner, while guaranteeing a moisture seal between the housings.

The problem of the invention is to provide a connection assembly of the described type which simplifies manufacture and mounting without impairing the sealing action.

This problem is solved by a connection assembly according to claim 1.

In the connection assembly according to the invention, in place of two individual, detachable flat seals a single sealing ring is provided, which is undetachably shaped onto the mounting plate, preferably by injection-moulding and/or vulcanizing the sealing material on the mounting plate. The mounting plate and the circular, bilaterally acting sealing ring form a single assembly so that, compared with the prior art, in place of three components, namely the mounting plate and two flat seals, there is only a single component, namely the sealing ring undetachably connected to the mounting plate, which can be more easily manufactured, stored and fitted than the three aforementioned, separate, prior art components.

The connection assembly can undergo rotary setting with respect to the stator winding in the prefitted, not yet clamped state, without it being necessary to remove the mounting plate and seal from the motor casing. This permits a rotary adjustment of the connection assembly with respect to the stator winding, whilst essentially maintaining the sealing function of the seal.

The undetachability of the seal relative to the mounting plate can advantageously be ensured in that the mounting plate has at least one through hole, which is filled by the sealing material of the sealing ring during the shaping of the latter onto the mounting plate. This ensures a completely satisfactory anchoring of the seal to the mounting plate and the undetachability thereof.

Further advantageous developments of the invention are given in the subclaims.

The invention is described in greater detail hereinafter relative to an embodiment and the attached diagrammatic drawings, wherein:
- Fig. 1: is an axial section through a connection assembly according to the invention, which is housed in a casing together with an electric motor, whose components are shown in broken lines;
- Fig. 2: is a section like Fig. 1 of the connection assembly alone.

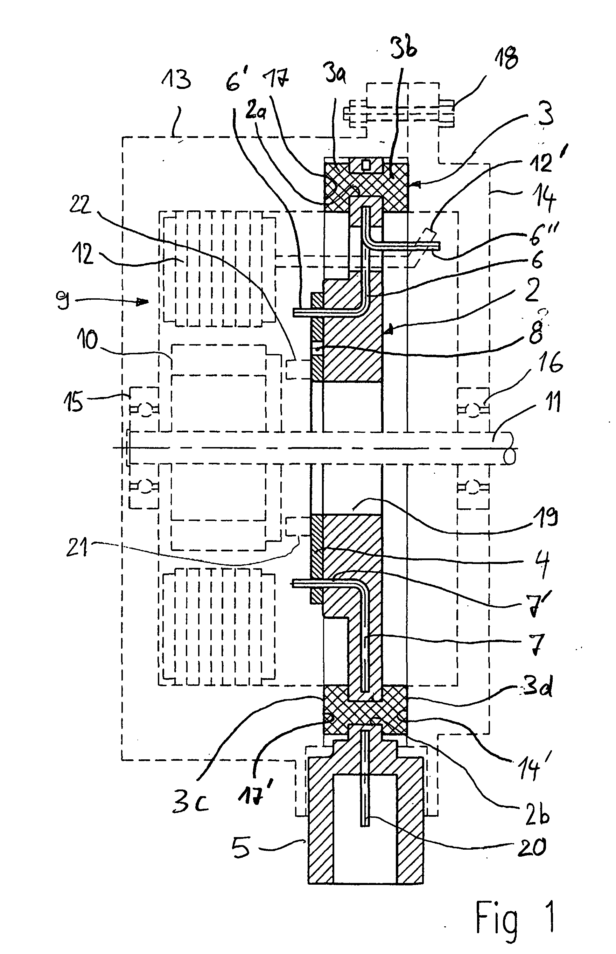

According to Fig. 1 an electric motor 9 has in the usual way a rotor 10 with a driven shaft 11 and a stator winding 12 surrounding the rotor. The electric motor 9 is surrounded by a two-part casing with a casing pot 13 and cover 14. In each of the two casing parts is supported an antifriction bearing 15, 16 for mounting the shaft 11.

A depression 17 of the casing pot 13 houses a connection assembly 1 drawn in full lines which has a plastic mounting plate 2, a printed circuit board 4 fixed thereto, a sealing ring 3 made from a sealing material, such as a thermoplastic elastomer, a silicone elastomer or a PU plastic injection moulded onto the mounting plate, a plug part 5 integrated with the mounting plate 2 and connection plates or lead frames 6 and 7.

The mounting plate 2 and printed circuit board 4 have a common opening 19 for the driven shaft 11 of the electric motor 9.

The printed circuit board 4 is fixed to the front face of the circular mounting plate 2 facing the motor by a mechanical fixing element indicated at 8 and is axially traversed by axially angled parts 6', 7' of the lead frames. The lead frame 7 is led laterally out of the mounting plate 2 in the form of individual plug lugs 20, which terminate in a plug housing 5.

The connection plate 6 has a further end 6" led out of the mounting plate 2 in direction axially opposed to that of the end 6', the end 6" being used for connecting to one or more conductors 12' of the stator winding 12 on the mounting plate side remote from the electric motor 9.

The mounting plate 2 has through holes 2a, 2b which are filled with the sealing material of the sealing ring 3. In this way, the ring parts 3a, 3b formed on both sides of the mounting plate 2 are undetachably interconnected and held in undetachable manner on the mounting plate 2.

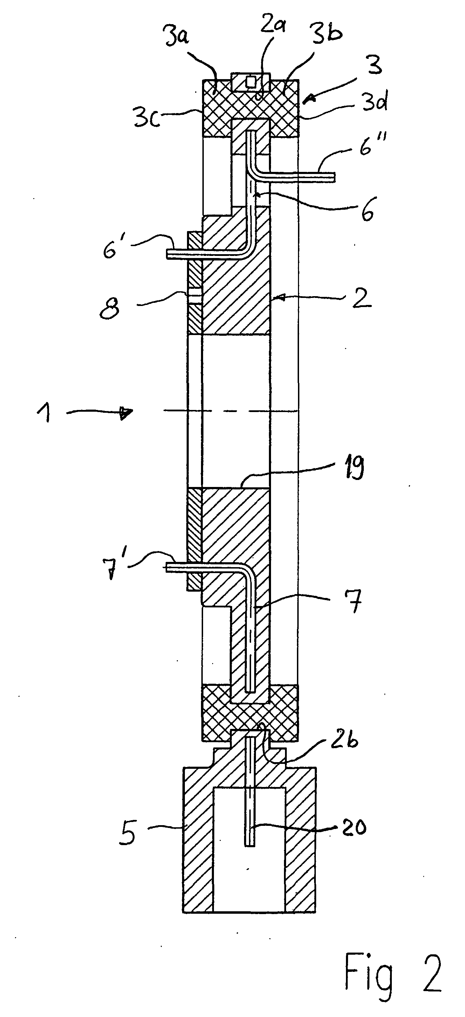

The bottom of the depression 17 in the casing pot 13 and the motor-side radial surface of the cover 14 form opposite sealing surfaces 17', 14', which sealingly cooperate with axially outwardly directed, opposite sealing surfaces 3c, 3d of the sealing ring 3, if the casing pot 13 with the cover 14 are clamped to each other by means of circumferentially distributed screws 18, whereof only one screw is shown in Figs. 1 and 2.

For mounting the prefabricated connection assembly 1, the latter is pressed into the depression 17, so that a sealing action is already obtained between the sealing surface 17' of the casing pot 13and the mating surface 3c of the ring part 3a of the seal when the cover 14 is prefitted but not yet clamped. In this position the entire connection assembly 1 can be rotated and therefore adjusted relative to the parts of the electric motor 9, the motor components and mounting plate 2, together with the printed circuit board 4, and the motor control elements 22 and sensors 21 prefitted thereto are already protected against the penetration of foreign matter, such as spray water.

At 21, the printed circuit board 4 can carry symbolically indicated sensor elements 21, e.g. Hall components for establishing the rotary position and/or speed of the motor and which cooperate with control magnets. The latter can be adjusted by rotating the connection assembly 1. The control components are symbolically indicated at 22.

Fitting can be completed by tightening the cover 14 with its sealing surface 14' on the mating surface 3d of ring part 3b and consequently its other mating surface 3a against the sealing surface 17' on casing pot 13 by means of screws 18.

The features disclosed in the preceding description, claims and drawings can, both individually and in random combination, be of significance for the implementation of different variants of the invention.

### List of Reference Numerals

- 1: Connection assembly

- 2: Mounting plate
- 2a, 2b: Through holes

- 3: Sealing ring
- 3a, 3b: Ring part
- 3c, 3d: Sealing face, mating face

- 4: Printed circuit board

- 5: Plug part
- 6, 7: Connection element, connection plate, lead frame
- 6', 6", 7': Angled part of the connection element, bends

- 8: Fixing element
- 9: Electric motor
- 10: Rotor
- 11: Driven shaft

- 12: Stator winding
- 12': Conductor

- 13: Casing pot

- 14: Cover
- 14': Sealing surface of cover

- 15, 16: Antifriction bearings

- 17: Depression
- 17': Sealing surface of casing pot

- 18: Screw
- 19: Opening
- 20: Plug lug, plug pin
- 21: Sensor
- 22: Control component

## Claims

1. Connection assembly (1) for the electrical connection of an electric motor (9), which has a plastic mounting plate (2) with integrated connection elements (6, 7), a printed circuit board (4) with sensor and/or control components (21, 22) for the electric motor and a seal comprising a one-part sealing ring (3) of a sprayable or mouldable sealing material, which is undetachably shaped onto the mounting plate (2) and which can be clamped between two opposing sealing surfaces (14', 17') of a two-part motor casing (13, 14); wherein
on either side of the mounting plate (2), the sealing ring (3) has a ring part (3a, 3b), each of which being provided on its outside with a sealing mating surface (3c, 3d) which sealingly cooperates with one of the two opposing sealing surfaces (17', 14');
and
the mounting plate (2) has at least one through hole (2a, 2b), which is filled with the sealing material of a sealing ring (3), so that there is at least one cohesive material connection of one ring part (3a) to the opposite ring part (3b).

2. Connection assembly according to claim 1, **characterized in that** the sealing ring (3) is injection-moulded onto the mounting plate (2).

3. Connection assembly according to one of the claims 1 and 2, **characterized in that** a printed circuit board (4) equipped with sensor and/or control components (21, 22) is held on the motor side to the mounting plate (2) by means of fixing elements (8) shaped onto the latter.

4. Connection assembly according to claim 3, **characterized in that** in the mounting plate (2) are embedded connection elements (6, 7), which have bends (6', 7') bent axially towards the electric motor (10, 12) and by means of which the printed circuit board (4) is oriented and which are electrically contacted to conductors located on said board.

5. Connection assembly according to claim 4, **characterized in that** at least one (6) of the connection elements has a bend (6"), which passes through an opening in the mounting plate (2) and is electrically conductively connected on the side of the mounting plate (2) remote from the electric motor (9) to at least one conductor (12') of the stator winding (12).

6. Connection assembly according to claim 4 or 5, **characterized in that** at least one plug lug (20) of the connection element (7) terminates in a plug part (5), which is an integral part of the mounting plate (2).

## Patentansprüche

1. Anschlußbaugruppe (1) für den elektrischen Anschluß eines Elektromotors (9), die eine Trägerplatte (2) aus Kunststoff mit integrierten Anschlußelementen (6,7), eine Leiterplatte (4) mit Sensor- und/oder Steuerkomponenten (21,22) für den Elektromotor und eine Abdichtung aufweist, die einen einteiligen Dichtring (3) aus einem spritz- oder gießformbaren Dichtwerkstoff umfaßt, der an die Trägerplatte (2) unverlierbar angeformt ist und zwischen zwei gegenüberliegenden Dichtflächen (14', 17') eines zweigeteilten Motorgehäuses (13,14) einklemmbar ist, wobei der Dichtring (3) beidseitig der Trägerplatte (2) je ein Ringteil (3a,3b) aufweist, das jeweils auf seiner Außenseite eine dichtende Gegenfläche (3c,3d) hat, die mit jeweils einer der beiden gegenüberliegenden Dichtflächen (17',14') abdichtend zusammenwirkt; und die Trägerplatte (2) mindestens ein Durchgangsloch (2a,2b) aufweist, welches mit Dichtmaterial des Dichtringes (3) gefiillt ist, so daß mindestens eine zusammenhängende Materialverbindung von dem einen Ringteil (3a) zum gegenüberliegenden Ringteil (3b) besteht.

2. Anschlußbaugruppe nach Anspruch 1, **dadurch gekennzeichnet, daß** der Dichtring (3) an die Trägerplatte (2) angespritzt ist.

3. Anschlußbaugruppe nach Anspruch 1 oder 2, **dadurch gekennzeichnet, daß** eine mit Sensor- und/oder Steuerkomponenten (21,22) bestückte Leiterplatte (4) motorseitig an der Trägerplatte (2) mittels an die Trägerplatte angeformter Befestigungselemente (8) gehalten ist.

4. Anschlußbaugruppe nach Anspruch 3, **dadurch gekennzeichnet, daß** in die Trägerplatte (2) Anschlußelemente (6,7) eingebettet sind, die axial in Richtung zum Elektromotor (10,12) hin gebogene Abwinkelungen (6',7') aufweisen, mittels derer die Leiterplatte (4) ausgerichtet ist und die mit auf der Leiterplatte befindlichen Leiterbahnen elektrisch kontaktiert sind.

5. Anschlußbaugruppe nach Anspruch 4, **dadurch gekennzeichnet, daß** zumindest eines (6) der Anschlußelemente eine Abwinkelung (6") aufweist, die durch eine Öffnung in der Trägerplatte (2) hindurchragt und auf der dem Elektromotor (9) abgewandten Seite der Trägerplatte (2) mit mindestens einem Leiter (12') der Statorwicklung (12) elektrisch leitend verbunden ist.

6. Anschlußbaugruppe nach einem der Ansprüche 4 oder 5, **dadurch gekennzeichnet, daß** mindestens eine Steckerfahne (20) des Anschlußelements (7) in einem Steckerteil (5) endet, das integraler Bestandteil der Trägerplatte (2) ist.

## Revendications

1. Structure de connexion (1) pour la connexion électrique d'un moteur électrique (9), qui comporte une plaque de montage (2) en matière plastique avec des éléments de connexion intégrés (6, 7), une carte de circuit imprimé (4) avec des composants de détection et/ou de commande (21, 22) pour le moteur électrique et un joint comprenant une bague de scellement d'une seule pièce (3) en un matériau de scellement pulvérisable ou moulable, qui est mis en forme de façon inamovible contre la plaque de montage (2) et qui peut être bloqué entre deux faces de scellement opposées (14', 17') d'un boîtier de moteur en deux parties (13, 14) ; dans laquelle :
des deux côtés de la plaque de montage (2), la bague de scellement (3) comporte une partie annulaire (3a, 3b) dont chacune est munie du côté extérieur d'une surface d'accouplement de joint (3c, 3d) qui coopère pour former un scellement avec l'une des deux surfaces de scellement opposées (17', 14') ; et
la plaque de montage (2) comprend au moins un trou traversant (2a, 2b) qui est rempli du matériau de scellement d'une bague de scellement (3), de sorte qu'il y a au moins une connexion par un matériau de cohésion d'une partie de bague (3a) vers la partie de bague opposée (3b).

2. Structure de connexion selon la revendication 1, **caractérisée en que** la bague de scellement (3) est moulée par injection sur la plaque de montage (2).

3. Structure de connexion selon l'une des revendications 1 et 2, **caractérisée en ce que** la carte de circuit imprimé (4) équipée des composants de détection et/ou de commande (21, 22) est montée du côté moteur sur la plaque de montage (2) au moyen d'éléments de fixation (8) formés sur cette dernière.

4. Structure de connexion selon la revendication 3, **caractérisée en ce que**, dans la plaque de montage (2), sont logés des éléments de connexion (6, 7) qui comportent des courbures (6', 7') courbées axialement vers le moteur électrique (10, 12) et au moyen desquelles la carte de circuit imprimé (4) est orientée et qui sont contactées électriquement avec des conducteurs disposés sur la carte.

5. Structure de connexion selon la revendication 4, **caractérisée en ce qu'**au moins un (6) des éléments de connexion comporte une courbure (6"), qui passe à travers une ouverture dans la plaque de montage (2) et est connectée de façon électriquement conductrice du côté de la plaque de montage (2) éloignée du moteur électrique (9) vers au moins un conducteur (12') de l'enroulement de stator (12).

6. Structure de connexion selon la revendication 4 ou 5, **caractérisée en ce qu'**au moins une patte de connexion (20) de l'élément de connexion (7) se termine en une partie de plot (5), qui est solidaire de la plaque de montage (2).
